Europäisches Patentamt

European Patent Office

Office européen des brevets

(11) Publication number: **0 141 005**
**A1**

## (12) EUROPEAN PATENT APPLICATION

(21) Application number: **83830206.5**

(51) Int. Cl.⁴: **F 16 D 25/11**

(22) Date of filing: **24.10.83**

(43) Date of publication of application:
**15.05.85 Bulletin 85/20**

(84) Designated Contracting States:
**BE DE GB NL SE**

(71) Applicant: **CARLO GRAZIANO S.p.A. TORINO**
**Via Cumiana 14**
**I-10090 Cascine Vica (Torino)(IT)**

(72) Inventor: **Musso, Diego**
**Corso Brunelleschi 7/14**
**I-10414 Torino(IT)**

(72) Inventor: **Mussa, Gabriele**
**Via Giacomo Medici 91**
**I-10145 Torino(IT)**

(74) Representative: **Notaro, Giancarlo et al,**
**c/o Jacobacci-Casetta & Perani S.p.A. Via Alfieri, 17**
**I-10121 Torino(IT)**

(54) Gearbox with hydraulically-operated multiple-disc clutches.

(57) In a gearbox with hydraulically-operated multiple-disc clutches (11,12,13,14), particularly for vehicles, the hydraulic circuit for operating the clutches includes an auxiliary valve (29) for regulating the clutch operating pressure, which is arranged to prevent the pressure downstream thereof exceeding the minimum necessary for engaging the clutches as long as the pressure upstream thereof does not reach a predetermined value greater than the minimum value. The auxiliary valve (29) is also arranged to allow an increase in the downstream pressure which is gradual before the minimum value is reached and rapid when this minimum value is exceeded.

FIG. 2

Croydon Printing Company Ltd.

"Gearbox with hydraulically-operated multiple-disc clutches"

The present invention relates to a gearbox with hydraulically-operated multiple-disc clutches, particularly for vehicles, comprising:

an input shaft, an output shaft and an auxiliary shaft, -

a plurality of gear couplings carried by the shafts and corresponding to various transmission ratios, one of the two gears of each coupling being freely rotatably mounted on its respective shaft,

a plurality of multiple-disc clutches for connecting each freely rotatable gear for rotation with its respective shaft,

a hydraulic circuit for operating the clutches, including:

a pump driven by the input shaft of the gearbox, for supplying pressurized fluid,

gear selecting means interposed in the connection between the pump and the clutches for enabling pressurized fluid to be fed only to the clutch corresponding to the transmission ratio selected at the time,

a slow-closing (inching) valve located upstream of the selecting means for varying the pressure for operating the clutches, and

a maximum pressure valve for preventing the clutch operating pressure exceeding a predetermined maximum.

Gearboxes of the type specified above, which are also called "power-shift transmissions" by experts in the art, are used in various types of vehicles (for example in lifting trucks). In use of vehicles having transmissions of this type, the operator engages the various gears (only one series of forward gears and one series of reverse gears) by operating the selecting means. When it is necessary to effect a small movement, the operator makes use of the inching valve which usually has a control pedal. By pressing the pedal, the operator causes a reduction in the pressure directed to the clutches by the selecting means until it is reduced to zero with the pedal fully depressed. Once a gear has been engaged, the operator may then control the advance of the vehicle by operating the pedal. Hence, when the engine is running and the operator has already engaged a gear, it is necessary to keep the control pedal of the inching valve pressed if he wishes to keep the vehicle stationary. In known solutions, this is necessary even when the engine is idling. Indeed, at the minimum speed of rotation of the engine, the pressure of the fluid fed by the pump (which is driven by the engine) is already sufficient to engage the selected clutch. It would be desirable, however, for it to be unnecessary for the operator to keep the control pedal of the inching valve pressed when he wishes to maintain the vehicle stationary with the engine idling and the gear engaged.

The object of the present invention is to provide a gearbox which has this characteristic. In order to achieve this object, the invention provides a gearbox of the type specified at the beginning, the main characteristic of which lies in the fact that an auxiliary valve is located upstream of the inching valve for regulating the clutch operating pressure and is arranged to prevent the pressure downstream thereof exceeding the minimum value necessary for engaging the clutches as long as the pressure upstream thereof does not reach a predetermined value greater than the minimum value, the auxiliary valve also being arranged to allow an increase in the pressure downstream thereof which is gradual before the minimum value is reached and rapid when this minimum value is exceeded.

In a preferred embodiment, the auxiliary regulating valve comprises:

a hollow body,

an inlet aperture which receives pressurized fluid from the pump,

an outlet aperture connected to the inching valve,

a shutter slidably mounted in the hollow body and defining therein a first chamber arranged to communicate with the inlet aperture and a second chamber communicating with a discharge reservoir,

resilient means biasing the shutter member in the direction of the first chamber towards a closure position in which it cuts off the communication between the inlet aperture and the outlet aperture,

and in which the shutter includes a passage which puts the outlet aperture into communication with the second chamber when the shutter is spaced from its closure position by a distance less than a predetermined value.

In a variant, the auxiliary regulating valve is incorporated in the maximim pressure valve.

Further characteristics and advantages of the present invention will become apparent from the description which follows with reference to the appended drawings, provided purely by way of non-limiting example, in which:

Figure 1 is a schematic view of a gearbox according to the invention;

Figure 2 is a block schematic diagram of part of the hydraulic circuit associated with the gearbox of Figure 1, and

Figure 3 is a sectional view of the auxiliary regulating valve forming part of the gearbox according to the invention.

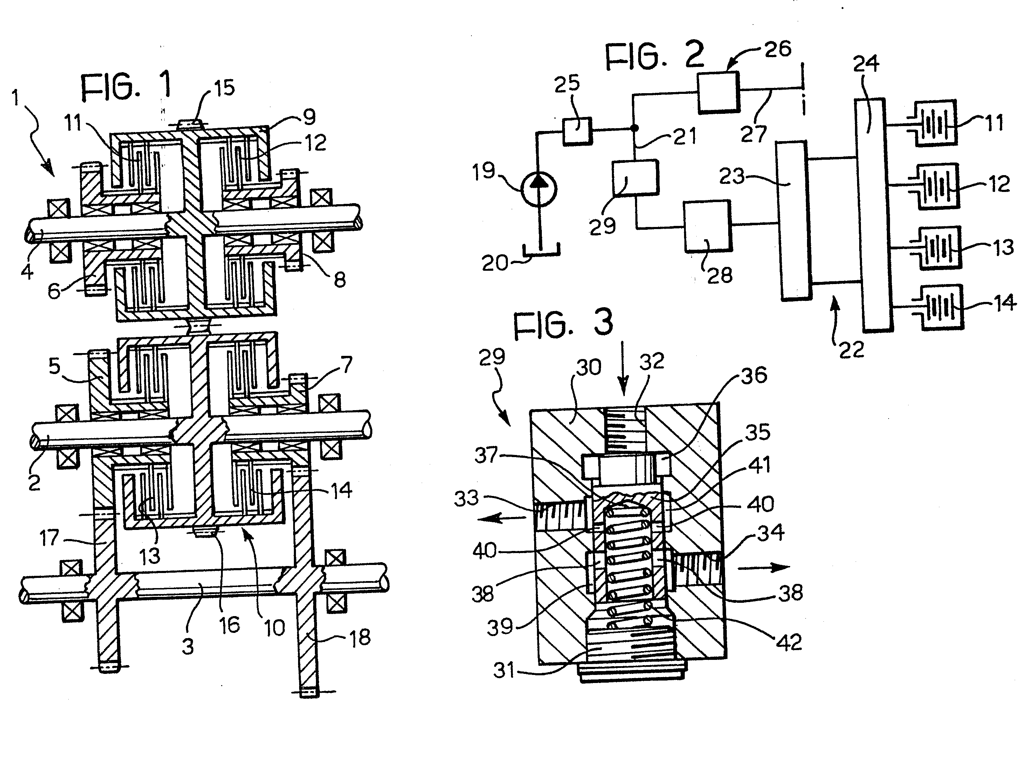

Figure 1 illustrates schematically a gearbox 1 with hydraulically-operated multiple-disc clutches, having two forward gears and two reverse gears, for use in a lifting truck..

The gearbox 1 includes an input shaft 2 connected to the engine of the vehicle through a torque converter(not illustrated ), an output shaft 3 and an auxiliary shaft 4. Although the shafts 2, 3, 4 are all illustrated, for greater clarity, in Figure 1, the axes of these shafts are not coplanar, the gear wheels carried by the auxiliary shaft 4 and the output shaft 3 being meshed with each other.

Two pairs of gears 5, 6 and 7, 8 are freely rotatably mounted on the input shaft 2 and the auxiliary shaft 4.

The gears 6, 8 and the gears 5, 7, respectively, may be made rigid with two bells 9, 10 connected for rotation to the shafts 4, 2 by means of multiple-disc clutches 11, 12, 13, 14. The bells 9, 10 have two ring gears 15, 16 meshed with each other.

Figure 2 illustrates part of the hydraulic circuit for supplying pressurized fluid to the pistons which control the engagement of the clutches 11 to 14.

In Figure 2, a pump for supplying pressurized fluid is indicated 19, and in a practical embodiment is constituted by a pump with gears driven directly by the housing of the aforementioned torque converter which is rigid with the fly-wheel of the engine.

The pump 19 has its inlet connected to a reservoir 20 and its delivery connected through a line 21 to the clutches 11 to 14. Upstream of the clutches are gear selecting means 22 arranged to enable pressurized fluid to reach only the clutch corresponding to the transmission ratio selected at the time. In the example illustrated, the selecting means 22 comprise a manually controlled selector valve 23 having two operative positions: a first operative position for allowing pressurized fluid to reach only the clutches 11, 12 corresponding to the two forward gears, and a second operative position for allowing pressurized fluid to reach only the two clutches 13, 14 corresponding to the two reverse gears. The selecting means 22 further include a selector valve 24 which is also manually controlled and also has two operative positions: a first position for allowing pressurized fluid to reach only the clutches 11, 13 corresponding to the two low speed gears, and a second operative position for allowing pressurized fluid to reach only the clutches 12, 14. By operating the two selector valves 23, 24 the operator may thus select any one of the clutches 11 to 14 corresponding to the four possible speeds.

Downstream of the pump 19 is a filter 25. A maximum pressure valve, indicated 26, is open when the pressure in the line 21 exceeds a predetermined maximum value corresponding to the engagement of a clutch with maximum torque transmission. When the valve 26 is open, the excess pressure is exhausted through a line 27 which supplies the torque converter (not illustrated) associated with the gearbox and the gear lubricating circuit. In a practical embodiment which relates to a lifting truck, for example, the maximum predetermined value for which the valve 26 is calibrated may be seven atmospheres.

Immediately upstream of the selector means 22 is a valve for controlling the operating pressure for the clutches, which is called a "slow-closing valve" (an inching valve in English-speaking countries). This valve usually has a control pedal and allows the operator to reduce the pressure directed to the clutches until it is zero with the pedal fully depressed. It is therefore useful to the operator when it is necessary to make the vehicle effect small movements. Once a gear is engaged, the control of the movement is, in fact, entrusted to the control pedal of the valve 28.

Thus, in known solutions, when the engine is running and a gear is engaged, the operator must depress the control pedal of the inching valve fully if he wishes to keep the vehicle stationary. This is necessary even when the engine is idling in that, even under these conditions, the pressure of the fluid supplied by the pump (in the example mentioned above this value is approximately equal to one atmosphere) suffices to engage the clutches.

In the case of a vehicle having a gearbox according to the invention, however, the operator does not have to operate the control pedal of the valve 28 to keep the vehicle stationary when the engine is idling. This result is achieved by the fact that, in the gearbox according to the invention, upstream of the inching valve 28, there is an auxiliary regulating valve 29 for preventing the pressure downstream thereof exceeding the minimum value necessary to engage the clutches as long as the pressure upstream thereof does not reach a predetermined value greater than the minimum value. Moreover, the valve 29 is arranged to allow an increase in the pressure downstream thereof which is gradual before the minimum value is reached and rapid after this value has been exceeded.

In the example mentioned above, the minimum pressure necessary to move the clutch discs together is one atmosphere and the pressure supplied by the pump when the engine is idling is of the same order of magnitude. Hence, if it were not for the valve 29 and if the valve 28 were inoperative, the engagement of a gear would cause the operation of the selected clutch. The auxiliary regulating valve 29 makes the pressure downstream thereof reach the minimum value, one atmosphere, necessary for engagement of the clutches only when the value of the pressure upstream thereof reaches four atmospheres. Furthermore, the valve 29 is arranged so that, when the pressure upstream thereof increases to four atmospheres, the pressure downstream thereof increases gradually to one atmosphere. The upstream pressure continuing to increase, the increase in the downstream pressure becomes rapid once the value of one atmosphere has been exceeded.

By virtue of this characteristic, the operator may leave the vehicle with the gear engaged and the engine idling and does not have to take any action in order to keep it stationary.

Figure 3 illustrates a preferred embodiment of the auxiliary regulating valve 29.

In this embodiment, the valve 29 comprises a hollow body 30 closed at one end by a plug 31 and having an inlet aperture 32 at its opposite end. The aperture 32 is intended to receive the pressurized fluid fed by the pump in parallel with the maximum pressure valve 26. The body 30 also has an outlet aperture 33 connected to the inching valve 28 and an exhaust aperture 34 connected to a discharge reservoir.

Within the hollow body 30 is slidably mounted a cup-shaped shutter 35 which defines within the hollow body a first chamber 36 arranged to communicate with the inlet aperture 32, and a second chamber 37 defined by the cavity of the cup-shaped body of the shutter 35 and communicating with the exhaust aperture 34 through radial holes 38 formed in the wall of the cup-shaped body of the shutter 35 and an annular chamber 39.

The chamber 37 is also arranged to communicate with the outlet aperture 33 through radial holes 40 also formed in the wall of the shutter 35 and an annular chamber 41.

A helical spring 42 interposed between the closure plug    31 and the bottom of the cup shaped body of the shutter 35 biases the shutter into a closure position in which communication between the inlet aperture 32 and the outlet aperture 33 is cut off, and in which the outlet aperture communicates with the exhaust    through the holes 40, the chamber 37, the holes 38 and the exhaust    aperture 34.

The pressure supplied to the inlet aperture 32 tends to move the shutter 35 away from its closure position. However,when the shutter is spaced from the closure position, the outlet aperture 33 still remains in communication with the exhaust    aperture 34 as long as the radial holes 40 tap the annular chamber 41. When the shutter is sufficiently far from its closure position to cut off the communication between the holes 40 and the outlet aperture 33, the pressure at this outlet aperture starts to increase rapidly.

With reference to the example mentioned above, when the engine is idling, the pressure supplied to the inlet aperture 32 is about one atmosphere. If the engine speed is increased, so as to increase the pressure supplied to the inlet aperture 32, this increase causes a slow increase in the pressure at the outlet aperture 33. More particularly, while the pressure at the inlet aperture 32 passes from one atmosphere to to four atmospheres, the pressure at the outlet aperture 33 increases gradually until it reaches one atmosphere. This is the minimum value necessary to cause engagement of the clutches. From this point onwards, a further increase in the pressure at the inlet  aperture 32 causes a rapid increase in the pressure at the outlet aperture 33. This is due to the fact that,when the pressure at the inlet aperture 33 reaches the value of one atmosphere, the shutter is in a position such that it cuts off communication between the aperture 33 and the hole 40 connecting this aperture

0141005

- 10 -

to the exhaust.    Adjustment of this pressure value
may be effected by operation of the closure plug
31 which is screwed into the body 30 so as to change
the load of the spring 42.

In a variant (not illustrated), the valve 29 is
incorporated in the maximum pressure valve 26.

Claims:

1.　Gearbox (1) with hydraulically-operated multiple-disc clutches (11, 12, 13, 14), comprising:

an input shaft (2), an output shaft (3) and an auxiliary shaft (4);

a plurality of gear couplings (6,17; 8,18; 5, 17; 7,18) carried by the shafts (2,3,4) and corresponding to various transmission ratios, one (5,6,7,8) of the two gears of each coupling being freely rotatably mounted on its respective shaft;

a plurality of multiple-disc clutches (11,12,13,14) for connecting each freely rotatable gear (5,6,7,8) for rotation with its respective shaft, and

a hydraulic circuit for operating the clutches (11, 12, 13,14) including:

a pump (19) driven by the input shaft (2) of the gearbox (1) for supplying pressurized fluid;

gear selecting means (22) interposed in the circuit between the pump (19) and the clutches (11,12,13,14) for enabling pressurized fluid to be fed only to the clutch corresponding to the transmission ratio selected at the time;

an inching valve (28) located upstream of the selecting means (22) for varying the clutch operating pressure, and

a maximum pressure valve (26) for preventing the clutch operating pressure exceeding a predetermined maximum,

characterised in that an auxiliary valve (29) is located upstream of the inching valve (28) for regulating the clutch operating pressure and is arranged to prevent the pressure downstream thereof exceeding the minimum value necessary for engaging the clutches (11,12,13,14) as long as the pressure upstream thereof does not reach a predetermined value greater than said minimum value, the auxiliary valve (29) also being arranged to allow an increase in the pressure downstream thereof which is gradual before the minimum value is reached and rapid when this minimum value is exceeded.

2. Gearbox according to Claim 1, characterised in that the auxiliary regulating valve (29) comprises a hollow body (30) defining an inlet aperture (32) which receives pressurized fluid from the pump (19) and an outlet aperture (33) connected to the inching valve (28);

a shutter (35) slidably mounted in the hollow body (30) and defining therein a first chamber (36) arranged to communicate with the inlet aperture (32) and a second chamber (37) communicating with a discharge reservoir, and

resilient means biasing the shutter member (35) in the direction of the first chamber (36) towards a closure position in which it cuts off the communication between the inlet aperture (32) and the outlet aperture (33),

and in that the shutter includes a passage (40,41) which puts the outlet aperture (33) into communication with the second chamber (37) when the shutter is spaced from its closure position by a distance less than a predetermined value.

3. Gearbox according to Claim 2, characterised in that the auxiliary regulating valve (29) is incorporated in the maximum pressure valve (26).

FIG. 1

FIG. 2

FIG. 3

1/1

0141005

European Patent
Office

**EUROPEAN SEARCH REPORT**

0141005
Application number

EP 83 83 0206

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 306 368 (ZAHNRADFABRIK FRIEDRICHSHAFEN AG) <br> * Page 1, line 16 - page 2, line 3; page 6, lines 1-12; page 8, lines 14-27; figures 1-5 * | 1,3 | F 16 D 25/11 |
| A | FR-A-2 367 957 (DEERE & CO.) <br> * Page 6, line 18 - page 7, line 9; figure 2 * | 2 | |
| A | US-A-3 389 770 (CATERPILLAR) <br> * Column 4, line 53 - column 5, line 7; figures 4-6 * | 1 | |

|  | TECHNICAL FIELDS SEARCHED (Int. Cl. ³) |
|---|---|
|  | F 16 D <br> F 16 H |

The present search report has been drawn up for all claims

| Place of search THE HAGUE | Date of completion of the search 15-06-1984 | Examiner VOGT-SCHILB G.J.F. |
|---|---|---|